# EUROPÄISCHE PATENTSCHRIFT

(11) **EP 3 875 314 B1**
(45) Veröffentlichungstag und Bekanntmachung des Hinweises auf die Patenterteilung: **27.04.2022**
(21) Anmeldenummer: 21159985.7
(22) Anmeldetag: 01.03.2021
(51) Int. Cl.: B60P 3/34, E04H 15/06, E04H 15/38, B60J 11/06

(54) **DACHZELTANORDNUNG MIT SCHUTZHÜLLE**
ROOF TENT WITH PROTECTIVE COVER
AGENCEMENT DE TENTE DE TOIT POURVU DE HOUSSE DE PROTECTION

(30) Priorität: 05.03.2020 DE 202020101232 U
(43) Veröffentlichungstag der Anmeldung: 08.09.2021
(73) Patentinhaber: Krämer, Michael, 44867 Bochum (DE)
(72) Erfinder: Krämer, Michael, 44867 Bochum (DE)
(74) Vertreter: Osterhoff, Utz

(56) Entgegenhaltungen:
- GB-A- 989 081
- GB-A- 2 465 330
- US-A- 2 847 018
- US-A- 3 742 966

## Beschreibung

Die vorliegende Erfindung betrifft eine Dachzeltanordnung für ein Kraftfahrzeug gemäß der Merkmale im Oberbegriff von Anspruch 1.

Es ist bekannt, Dachzelte zu nutzen. Hierbei wird ein Zelt als temporärer Wohnraum, insbesondere zum Schlafen auf dem Dach eines Kraftfahrzeuges oder auch eines Anhängers oder Bootes montiert. Insbesondere wird jedoch ein solches Dachzelt zumeist auf einem Kleinbus, auch Van bzw. Minivan, oder einem Kombi bzw. einem Jeep montiert.

Ein solches Dachzelt ist jedoch relativ schwer, so dass es nicht immer demontiert wird. Zum einen während der Reise, zum anderen während der Zeit der Nichtnutzung ist das zusammengeklappte Dachzelt äußeren Witterungseinflüssen ausgesetzt, da es nicht immer wieder demontiert wird bzw. während der Anfahrt zu einem Reiseziel auf dem Dach des Kraftfahrzeuges montiert ist.

Hierzu ist es aus dem Stand der Technik wiederum bekannt, Schutzhüllen über das Dachzelt zu stülpen. Eine solche Schutzhülle, auch Abdeckplane genannt, ist dabei an die äußere Kontur des zusammengeklappten bzw. eingeklappten Dachzeltes angepasst. Die Schutzhülle selbst ist jedoch aus einer relativ dickwandigen Kunststofffolie oder sogenannte LKW-Plane hergestellt. Um nunmehr die Schutzhülle von dem Dachzelt zu entfernen, muss diese von dem Dachzelt gelöst werden, was zumeist ein Hochschieben bzw. Abziehen auf einer Seite bedeutet, sodann muss die Schutzhülle zur gegenüberliegenden Seite komplett vom Dachzelt und auch vom Dach des Kraftfahrzeuges entfernt werden. Die Schutzhülle selbst kann bis zu mehreren Kilogramm wiegen. Insbesondere, wenn die Schutzhülle nass und/oder schmutzig ist, kann es zu einer unnötigen Beeinträchtigung der Person kommen, welche die Schutzhülle abnimmt. Darüber hinaus kann es zu Beschädigungen an dem Kraftfahrzeug während der Demontage der Schutzhülle kommen, beispielsweise Kratzer im Lack. Eine solche Dachzeltanordnung ist beispielsweise aus der GB 2 465 330 A bekannt.

Aufgabe der vorliegenden Erfindung ist es daher, ausgehend vom Stand der Technik eine verbesserte Anordnung der Schutzhülle und damit leichtere Bedienbarkeit eines aus dem Stand der Technik bekannten Dachzeltes aufzuzeigen.

Die zuvor genannte Aufgabe wird erfindungsgemäß bei einer Dachzeltanordnung mit den Merkmalen von Anspruch 1 gelöst.

Vorteilhafte Ausgestaltungsvarianten der vorliegenden Erfindung sind in den abhängigen Ansprüchen beschrieben.

Die vorliegende Erfindung betrifft demnach eine Dachzeltanordnung für ein Kraftfahrzeug. Bei einem Kraftfahrzeug handelt es sich besonders bevorzugt um einen Personenkraftwagen und hier insbesondere um einen Kombi, Jeep oder Minivan. Die Dachzeltanordnung kann jedoch auch auf anderen Gefährten, beispielsweise einem Anhänger so angeordnet werden. Hierzu ist ein Dachzelt vorgesehen sowie eine das Dachzelt im eingeklappten Zustand überdeckende Schutzhülle. Das Dachzelt selbst weist zwei Grundplatten auf. Eine erste Grundplatte befindet sich im montierten Zustand oberhalb des Daches des Kraftfahrzeuges. Diese Grundplatte ist zumeist auf Dachgepäckträgern mit dem Kraftfahrzeug gekoppelt. Eine zweite Grundplatte ist im eingeklappten Zustand des Dachzeltes in etwa parallel beabstandet über der ersten Grundplatte angeordnet. Dazwischen befindet sich ein zusammengeklappter Zeltkörper. Die Schutzhülle überdeckt dabei eine Rückseite der zweiten Grundplatte im eingeklappten Zustand. Die Rückseite der zweiten Grundplatte ist im eingeklappten Zustand auf die Vertikalrichtung bezogen nach oben gerichtet. Ferner überdeckt die Schutzhülle seitlich das zusammengeklappte Dachzelt. Letztlich umgreift ein unteres freies Ende der Schutzhülle die erste Grundplatte zumindest in deren Randbereich.

Erfindungsgemäß zeichnet sich die Dachzeltanordnung nunmehr dadurch aus, dass im Randbereich der zweiten Grundplatte eine Profilleiste die Schutzhülle durchgreifend mit der zweiten Grundplatte gekoppelt ist und/oder dass auf der Rückseite der zweiten Grundplatte eine Leiter und/oder Träger montiert sind, wobei die Leiter und/oder Träger die Schutzhülle durchgreifend mit der zweiten Grundplatte gekoppelt sind.

Erfindungswesentlich ist insbesondere, dass die Schutzhülle parallel und flächig an der Rückseite der zweiten Grundplatte anliegt und hier zumindest teilweise mit dieser fest gekoppelt ist. Erfindungsgemäß werden dadurch zwei Vorteile erreicht. Zum einen muss die Schutzhülle nicht mehr zum Aufklappen des Dachzeltes vollständig von dem Dachzelt entfernt werden. Es müssen nur die Seiten der Schutzhülle hochgeklappt bzw. hochgekrempelt werden und dann kann eine Montage bzw. ein Aufklappen des Dachzeltes erfolgen. Darüber hinaus ist in dem Bereich, in dem die flächige Seite der Schutzhülle durchgehend ausgebildet ist, mit dem Seitenbereich der Schutzhülle wasserdicht ausgebildet. Hier ist nicht durch externe Kopplung oder sonstiges eine potentielle Schwachstelle, durch welche Wasser eindringt, gegeben. Sollte die Schutzhülle nach intensivem mehrjährigen Gebrauch spröde oder rissig werden, kann kostengünstig die gesamte Schutzhülle einfach getauscht werden. Es müssen nicht einzelne Anbauteile gelöst werden oder ähnliches.

Die Schutzhülle selbst ist aus Kunststofffolie oder LKW-Plane ausgebildet.

Damit die Schutzhülle zumindest temporär fest mit der zweiten Grundplatte gekoppelt ist, ist diese an einer Innenseite im Randbereich der zweiten Grundplatte mit der Rückseite der zweiten Grundplatte gekoppelt, ganz besonders bevorzugt verklebt.

Der Randbereich ist insbesondere auf der Rückseite der zweiten Grundplatte, insbesondere von einer äußeren Kante nach innen versetzt, beabstandet ausgebildet. Hiermit wird es ermöglicht, dass die Schutzhülle zum Aufbau des Dachzeltes nach oben auf die Rückseite der zweiten Grundplatte gestülpt, gerollt bzw. geklappt werden kann.

Alternativ oder ergänzend ist es auch möglich, dass als Randbereich ein äußerer Randbereich, mithin eine äußere Stirnseite der zweiten Grundplatte als Kopplung vorgenommen wird. Die Schutzhülle übergreift jedoch immer flächig zum Großteil die zweite Grundplatte.

Ferner kann die Schutzhülle an ihren freien Enden mit Koppelmitteln versehen sein, welche im eingeklappten Zustand an der Unterseite der ersten Grundplatte gekoppelt werden. Beispielsweise können dieses Gummilaschen oder Gummizüge sein.

Darüber hinaus kann ein freies, im zusammengeklappten Zustand nach unten gerichtetes Ende der Schutzhülle einen Gummizug aufweisen, dergestalt, dass im zusammengeklappten Zustand die Unterseite der ersten Grundplatte umfasst bzw. umschnürt oder umstülpt wird. Das freie Ende zieht sich dann unterhalb der Unterseite der ersten Grundplatte zusammen, so dass die Schutzhülle das zusammengeklappte Dachzelt schützt.

Das Dachzelt selbst kann ein zum Aufbau um 180 Grad klappbares Dachzelt sein. Das Dachzelt kann jedoch auch als eine Art Pop Out Dachzelt ausgebildet sein, so dass zum Aufbau des Dachzeltes nur die zweite Grundplatte von der ersten Grundplatte nach oben verschoben wird und dazwischen ein entsprechender Zeltraum entsteht. In beiden Fällen muss jedoch erfindungsgemäß die Schutzhülle nicht komplett von dem Dachzelt entfernt werden.

Weitere Vorteile, Merkmale, Eigenschaften und Aspekte der vorliegenden Erfindung sind Gegenstand der nachfolgenden Zeichnungen. Bevorzugte Ausgestaltungsvarianten werden in schematischen Figuren dargestellt. Sie dienen dem einfachen Verständnis der Erfindung. Es zeigen
- Figur 1: eine Dachzeltanordnung mit Dachzelt auf dem Dach eines Kraftfahrzeuges,
- Figur 2: eine Dachzeltanordnung mit demontierter Schutzhülle,
- Figur 3: eine Dachzeltanordnung im aufgebauten Zustand,
- Figur 4: eine Dachzeltanordnung mit Schutzhülle an der Rückseite der zweiten Grundplatte,
- Figur 5: eine Dachzeltanordnung mit hochgeklappter Schutzhülle,
- Figur 6: eine Dachzeltanordnung nach Figur 5 mit gestülpter Schutzhülle,
- Figur 7: eine Dachzeltanordnung mit aufgebautem Dachzelt,
- Figur 8: eine Draufsicht auf den Gegenstand nach Figur 6,
- Figur 9: eine Dachzeltanordnung nach Figur 8 mit zusätzlichem Gegenstand,
- Figur 10: eine Dachzeltanordnung nach Figur 9 mit aufgeweiteter Schutzhülle,
- Figur 11: eine Dachzeltanordnung nach Figur 4 mit zusätzlichem Gegenstand,
- Figur 12: eine Dachzeltanordnung nach Figur 11 mit hochgeklappter Schutzhülle,
- Figur 13a: eine Detailschnittansicht der hochgeklappten Schutzhülle mit Kleber
- Figur 13b: eine Detailschnittansicht der hochgeklappten Schutzhülle mit Profilleiste und Schraube

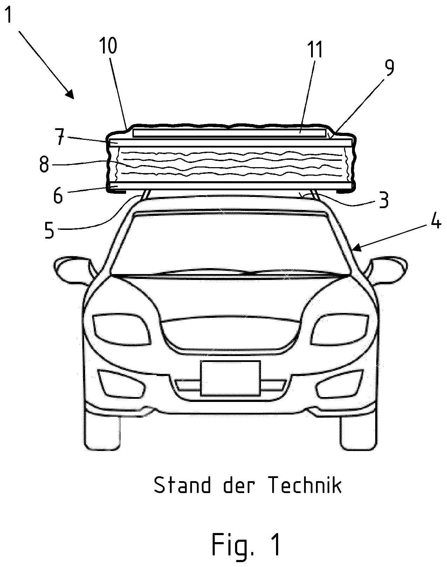

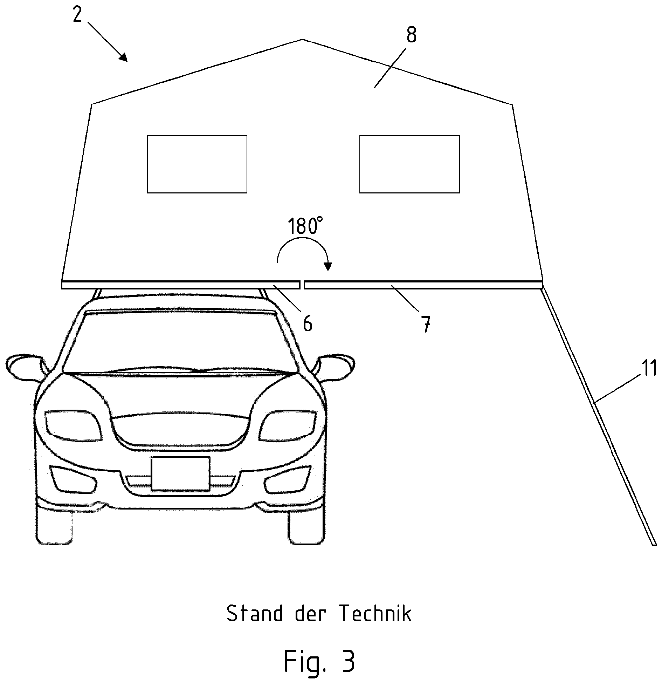

Die Figuren 1 bis 3 zeigen eine Dachzeltanordnung 1, welche aus dem Stand der Technik bekannt ist. In Figur 1 ist das Dachzelt 2 auf dem Dach 3 eines Kraftfahrzeuges 4 montiert. Das Dachzelt 2 ist insbesondere auf Dachträgern 5 montiert. Das Dachzelt 2 selbst weist eine erste Grundplatte 6 sowie eine parallel im zusammengeklappten Zustand dazwischen angeordnete zweite Grundplatte 7 sowie einen dazwischen angeordneten Zeltkörper 8 auf. An der Rückseite 9 der zweiten Grundplatte 7 ist ferner eine Leiter 11 montiert, welche beim Aufbau benötigt wird und auch zum späteren Betreten des Dachzeltes 2 verwendet wird.

Nunmehr ist aus dem Stand der Technik bekannt, dass eine vollständige Schutzhülle 10 das Dachzelt 2 allseitig umgreifend angeordnet ist. Die Schutzhülle 10 selbst ist hier im Querschnitt gezeigt, zur Illustrierung des Erfindungsgedankens.

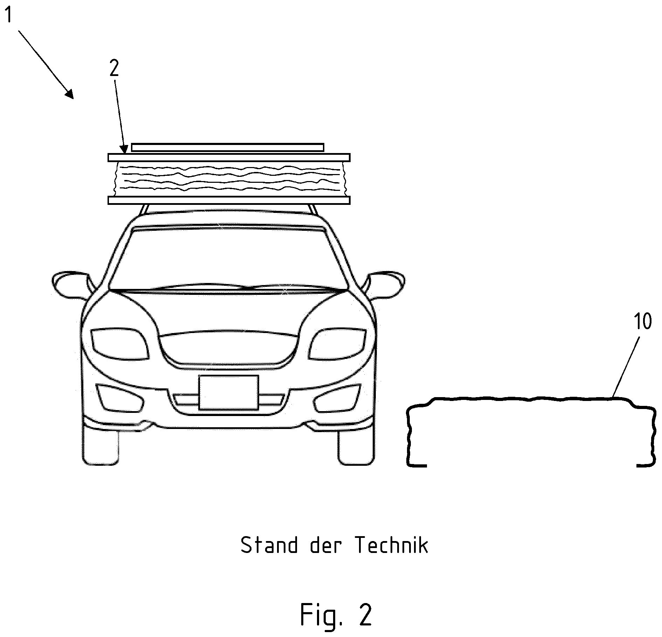

Gemäß Figur 2 ist die Schutzhülle 10 entfernt worden. Diese fällt sackartig in sich zusammen und ist hier zur Illustrierung des Erfindungsgedankens neben dem Kraftfahrzeug 4 dargestellt. Sodann wird durch eine 180 Grad Schwenkbewegung der zweiten Grundplatte 7 zu der ersten Grundplatte 6 das Dachzelt 2 selbst aufgebaut und der Zeltkörper 8 stellt einen temporären Wohn- bzw. Schlafraum dar.

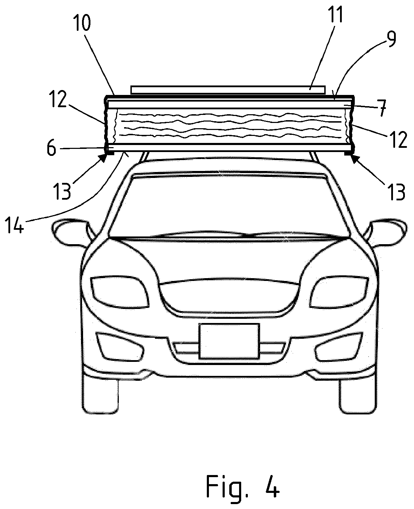

Die vorliegende Erfindung ist nunmehr in Figur 4 ff. dargestellt. Hierbei ist die Schutzhülle 10 direkt an der Rückseite 9 der zweiten Grundplatte 7 gekoppelt. Die Leiter 11 selbst ist die Schutzhülle 10 durchgreifend mit der zweiten Grundplatte 7 gekoppelt, was aus Vereinfachungsgründen jedoch nicht näher dargestellt ist. Die Seiten 12 der Schutzhülle 10 umgreifen dabei seitlich das zusammengeklappte Dachzelt 2. Ein, insbesondere umlaufendes, freies Ende 13 der Schutzhülle 10 untergreift die erste Grundplatte 6 bzw. eine Unterseite 14 der ersten Grundplatte 6 in einem Randbereich. Hierdurch ist im zusammengeklappten Zustand des Dachzeltes 2 vor äußeren Witterungseinflüssen, beispielsweise zur Lagerung und/oder bei Nichtgebrauch und/oder bei einer Fahrt zu einem Zielort, geschützt. Insbesondere ist in Figur 4 noch ersichtlich, dass ein flächiger Bereich der Schutzhülle 10 direkt auf der Unterseite 14 der zweiten Grundplatte 7 aufliegt.

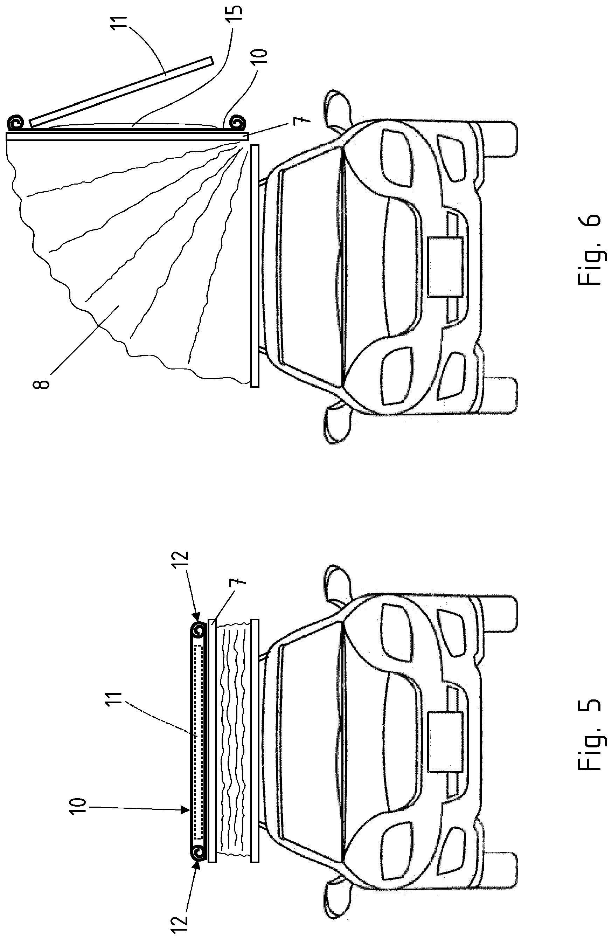

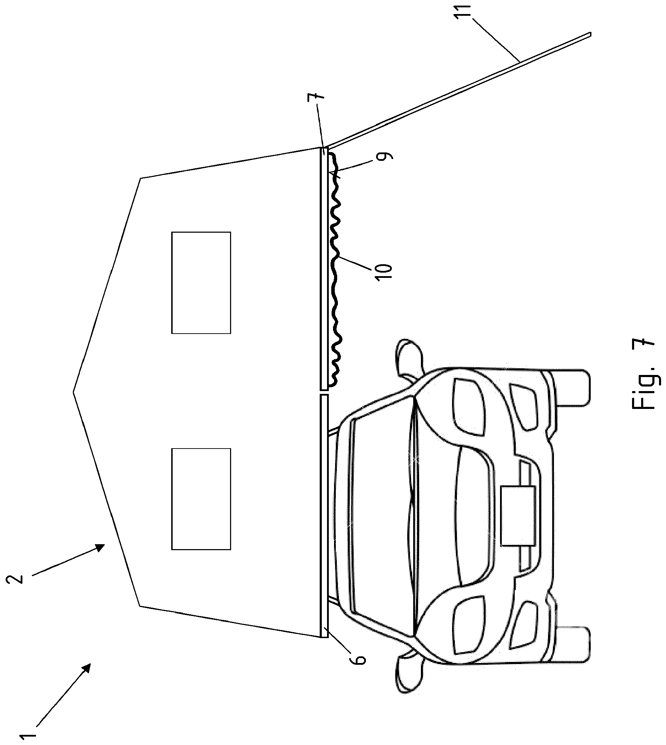

Der erfindungswesentliche Effekt zeigt sich nunmehr insbesondere in den Figuren 5 und 6. Die Seiten 12 bzw. das freie Ende 13 der Schutzhülle 10 werden einfach nach oben gestülpt bzw. gerollt oder gekrempelt und verbleiben dann an der zweiten Grundplatte 7. In dem weiteren Aufbauschritt des Dachzeltes 2 kann nunmehr die zweite Grundplatte 7 eine Schwenkbewegung ausführen. Die Schutzhülle 10 verbleibt während dieses gesamten Aufbauprocederes an der zweiten Grundplatte 7, muss also nicht demontiert werden. Die Dachzeltanordnung 1 bei dem aufgebauten Dachzelt 2 ist dann in Figur 7 gezeigt. Die Schutzhülle 10 kann somit von Figur 5 beginnend hochgeklappt werden und dann an der Rückseite 9 der zweiten Grundplatte 7 verbleiben. Eine separate Lagerung der Schutzhülle 10 entfällt ebenfalls. In Figur 7 ist der umgekrempelte Teil der Schutzhülle 10 nur schematisch angedeutet. Es könnte auch dargestellt werden, beispielsweise wie in Figur 5. Wichtig in diesem Zusammenhang ist nur, dass trotz aufgebautem Dachzelt 2 die Schutzhülle 10 auf der Rückseite 9 der zweiten Grundplatte 7 verbleibt und nirgendwo separat gelagert oder anderweitig abtransportiert werden muss. Ein konkreter Befestigungspunkt der Leiter 11 ist hier schematisch ebenfalls nur an der Ecke dargestellt. Dieser kann ebenfalls teilweise an der Rückseite 9 angeordnet sein. Weitere Befestigungsmittel, die zur Arretierung der Leiter 11 bei Nichtnutzung dienen, so dass die Leiter 11, beispielsweise wie in Figur 5, zusammengeklappt angeordnet ist, sind ebenfalls aus Vereinfachungsgründen nicht dargestellt.

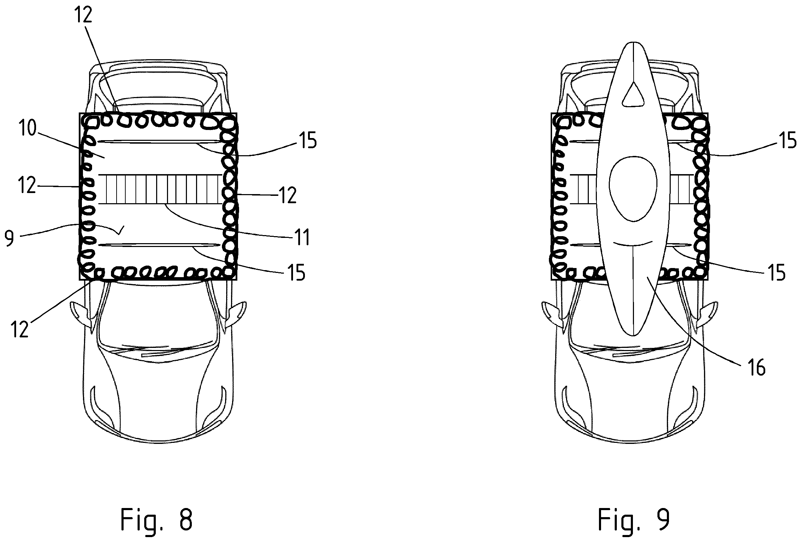

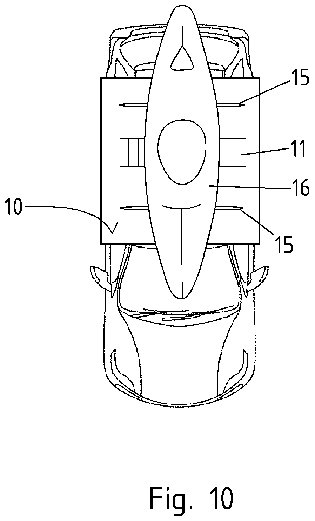

In Figur 6 ist noch ein weiterer Vorteil angedeutet. Hier sind zusätzliche Träger 15 montiert. Dies zeigt auch nochmals die Draufsicht gemäß Figur 8. Somit ist auf der Rückseite 9 der zweiten Grundplatte 7 zum einen der flächige Bereich der Schutzhülle 10 ausgebildet, zum anderen eine Leiter 11 angeordnet. Die Leiter 11 ist die Schutzhülle 10 durchgreifend mit der zweiten Grundplatte 7 gekoppelt. Ferner sind zwei zusätzliche Träger 15 angeordnet, so dass beispielsweise gemäß Figur 9 bzw. Figur 10 ein zusätzlicher Gegenstand, hier in Form eines Kanus 16 auf dem zusammengeklappten Dachzelt 2 montiert werden kann. Ebenfalls sind die Träger 15 die Schutzhülle 10 durchgreifend gekoppelt. Beispielsweise können auch Fahrradträger oder ähnliches hierauf gekoppelt sein. Erfindungsgemäß kann somit trotz Schutzhülle 10 eine zusätzliche Dachlast aufgenommen werden. Die Schutzhülle 10 ist dennoch dicht, da die Kopplungsstellen die Schutzhülle 10 durchgreifend abgedichtet sein können. An den umlaufenden Kanten ist die Schutzhülle 10 zwischen dem Flächenbereich auf der Rückseite 9 der zweiten Grundplatte 7 und den Seiten 12 hin zum freien Ende einstückig und werkstoffeinheitlich ausgebildet. Es sind somit keine Schwachstellen durch Nähte oder ähnliches in der Schutzhülle vorhanden.

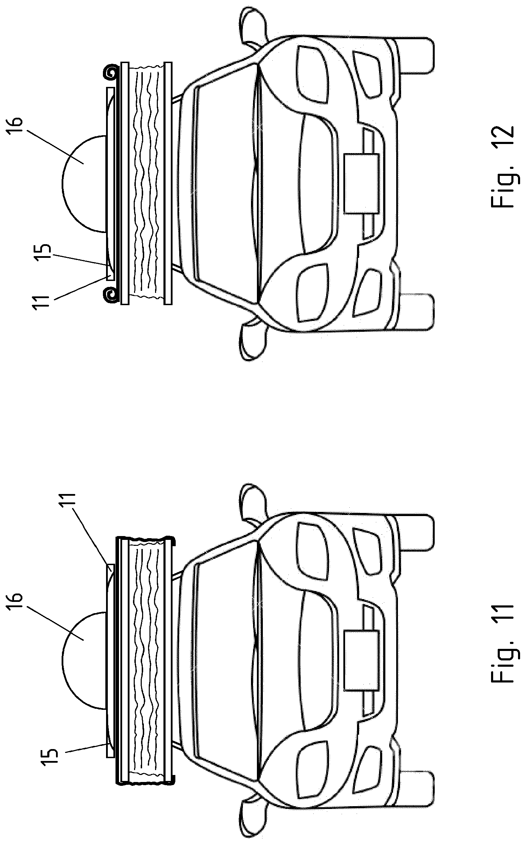

Nunmehr wird die jeweilige Seite 12 bzw. das freie Ende 13 zum Aufbau des Dachzeltes 2 hochgeklappt und dies ist umlaufend dargestellt und kann selbst bei noch montiertem Kanu 16 gemäß Figur 9 ebenfalls erfolgen. Dies ist auch noch einmal in den Figuren 11 und 12 dargestellt. Figur 11 entspricht Figur 4, wobei hier eben ein Gegenstand in Form eines Kanus 16 noch auf einem zusätzlichen Träger 15 angeordnet ist. Hinter dem Träger 15 ist dann noch ferner die Leiter 11 mit angeordnet. Die Schutzhülle 10 kann dann gemäß Figur 12 hochgestülpt bzw. hochgeklappt werden, ohne dass die Last zunächst entnommen werden muss. Insbesondere können jedoch die zusätzlichen Träger 15 sowie die Leiter 11 von außen auf der Schutzhülle 10 verbleiben.

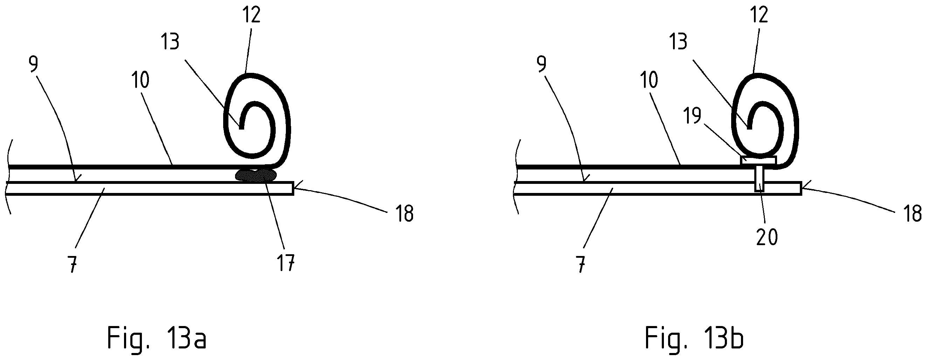

Die Figuren 13a und 13b zeigen eine Detailschnittansicht des umgeklappten freien Endes 13 bzw. der Seite 12 der Schutzhülle 10 gegenüber der Rückseite 9 der zweiten Grundplatte 7. Hier kann eine derartige Kopplung der Schutzhülle 10 erfolgen, beispielsweise, dass ein Klebstoff 17 von einer äußeren Stirnseite 18 nach innen versetzt beabstandet zwischen Grundplatte 6, 7 und Schutzhülle 10 angeordnet ist, so dass ein unbeabsichtigtes Lösen der Schutzhülle nicht möglich ist.

Erfindungsgemäß ist eine Profilleiste 19, beispielsweise mit einer Schraube 20 die Schutzhülle 10 durchgreifend, mit der zweiten Grundplatte 7 gekoppelt (siehe Fig. 13b) und/oder ist auf der Rückseite 9 der zweiten Grundplatte 7 eine Leiter 11 und/oder Träger 15, die Schutzhülle 10 durchgreifend mit der zweiten Grundplatte 7 gekoppelt (siehe z.B. Fig. 12). Auch dies würde ein weiteres unbeabsichtigtes Lösen der Schutzhülle 10 verhindern. Gerade im kritischen Randbereich ist ein flächiger Bereich der Schutzhülle 10 sowie die Seite 12 einstückig und werkstoffeinheitlich ausgebildet, so dass hier keine potentielle Schwachstelle, beispielsweise durch eine Naht oder ähnliches gegeben wäre.

### Bezugszeichen:

- 1 -: Dachzeltanordnung
- 2 -: Dachzelt
- 3 -: Dach
- 4 -: Kraftfahrzeug
- 5 -: Dachträger
- 6 -: erste Grundplatte
- 7 -: zweite Grundplatte
- 8 -: Zeltkörper
- 9 -: Rückseite zu 7
- 10 -: Schutzhülle
- 11 -: Leiter
- 12 -: Seite zu 10
- 13 -: freies Ende zu 10
- 14 -: Unterseite zu 6
- 15 -: Träger
- 16 -: Kanu
- 17 -: Klebstoff
- 18 -: Stirnseite
- 19 -: Profilleiste
- 20 -: Schraube

## Patentansprüche

1. Dachzeltanordnung (1) für ein Kraftfahrzeug (4), aufweisend ein Dachzelt (2) sowie eine das Dachzelt (2) im eingeklappten Zustand überdeckende Schutzhülle (10), wobei das Dachzelt (2) zwei Grundplatten (6, 7) aufweist und eine erste Grundplatte (6) im montierten Zustand sich oberhalb eines Daches (3) des Kraftfahrzeuges (4) befindet und eine zweite Grundplatte (7), die im eingeklappten Zustand in etwa parallel beabstandet über der ersten Grundplatte (6) angeordnet ist und dazwischen sich ein Zeltkörper (8) befindet und die Schutzhülle (10) eine Rückseite (9) der zweiten Grundplatte (7) überdeckt und seitlich das zusammengeklappte Dachzelt (2) übergreift und die erste Grundplatte (6) zumindest im Randbereich umgreift, **dadurch gekennzeichnet, dass** im Randbereich der zweiten Grundplatte (7) Profilleisten (19), die Schutzhülle (10) durchgreifend, mit der zweiten Grundplatte (7) gekoppelt sind und/oder dass auf der Rückseite (9) der zweiten Grundplatte (7) eine Leiter (11) und/oder Träger (15), die Schutzhülle (10) durchgreifend mit der zweiten Grundplatte (7) gekoppelt sind.

2. Dachzeltanordnung (1) nach Anspruch 1, **dadurch gekennzeichnet, dass** die Schutzhülle (10) aus einer Kunststofffolie oder LKW-Plane ausgebildet ist.

3. Dachzeltanordnung (1) nach Anspruch 1 oder 2, **dadurch gekennzeichnet, dass** die Schutzhülle (10) an einer Innenseite im Randbereich mit der Rückseite (9) der zweiten Grundplatte (7) gekoppelt ist, insbesondere verklebt ist.

4. Dachzeltanordnung (1) nach einem der vorangehenden Ansprüche, **dadurch gekennzeichnet, dass** die Schutzhülle (10) zumindest im Randbereich der Rückseite (9) der zweiten Grundplatte (7) fest mit dieser gekoppelt ist.

5. Dachzeltanordnung nach einem der vorangehenden Ansprüche, **dadurch gekennzeichnet, dass** der Randbereich ein äußerer Randbereich an der zweiten Grundplatte (7) ist, insbesondere eine umlaufende Stirnseite (18).

6. Dachzeltanordnung (1) nach einem der vorangehenden Ansprüche, **dadurch gekennzeichnet, dass** der Randbereich auf der Rückseite (9) der zweiten Grundplatte (7) ausgebildet ist, insbesondere von einer äußeren Kante nach innen versetzt beabstandet.

7. Dachzeltanordnung (1) nach einem der vorangehenden Ansprüche, **dadurch gekennzeichnet, dass** die Schutzhülle (10) an ihrem freien Ende (13) mit Koppelmitteln versehen ist, welche im eingeklappten Zustand an der Unterseite (14) der ersten Grundplatte (6) gekoppelt werden.

8. Dachzeltanordnung (1) nach einem der vorangehenden Ansprüche, **dadurch gekennzeichnet, dass** das freie Ende (13) der Schutzhülle (10) einen Gummizug aufweist, dergestalt, dass im zusammengeklappten Zustand die Unterseite (14) der ersten Grundplatte (6) umfasst bzw. einschnürt.

9. Dachzeltanordnung (1) nach einem der vorangehenden Ansprüche, **dadurch gekennzeichnet, dass** die Schutzhülle (1) zum Aufklappen des Dachzeltes (2) seitlich hochschiebbar, bzw. hochkrempelbar ist und im aufgeklappten Zustand des Dachzeltes (2) an der Rückseite (9) der zweiten Grundplatte (7) verbleibt.

## Claims

1. Roof tent assembly (1) for a motor vehicle (4), having a roof tent (2) and a protective cover (10) which covers the roof tent (2) in the folded-in state, wherein the roof tent (2) has two base plates (6, 7) and a first base plate (6) is located in the mounted state above a roof (3) of the motor vehicle (4) and a second base plate (7), which in the folded-in-state is arranged approximately parallel to, spaced from and above the first base plate (6) and a tent body (8) is situated between them and the protective cover (10) covers a rear side (9) of the second base plate (7) and grips over the folded-together roof tent (2) laterally and grips around the first base plate (6) at least at the edge region, **characterised in that** in the edge region of the second base plate (7) profile strips (19) engaging through the protective cover (10) are coupled to the second base plate (7) and/or that on the rear side (9) of the second base plate (7) a ladder (11) and/or support (15) are coupled to the second base plate (7) engaging through the protective cover (10).

2. Roof tent assembly (1) according to claim 1, **characterised in that** the protective cover (10) is made from a plastic film or lorry tarpaulin.

3. Roof tent assembly (1) according to claim 1 or 2, **characterised in that** the protective cover (10) is coupled at an inner side in the edge region to the rear side (9) of the second base plate (7), in particular is adhesively bonded.

4. Roof tent assembly (1) according to any of the preceding claims, **characterised in that** the protective cover (10), at least in the edge region of the rear side (9) of the second base plate (7), is securely coupled thereto.

5. Roof tent assembly according to any of the preceding claims, **characterised in that** the edge region is an outer edge region on the second base plate (7), particularly a circumferential end face (18).

6. Roof tent assembly (1) according to any of the preceding claims, **characterised in that** the edge region is formed on the rear side (9) of the second base plate (7) in particular spaced so as to be offset to the inside from an outer edge.

7. Roof tent assembly (1) according to any of the preceding claims, **characterised in that** the protective cover (10) is equipped at its free end (13) with coupling means which in the folded-in-state are coupled to the lower side (14) of the first base plate (6).

8. Roof tent assembly (1) according to any of the preceding claims, **characterised in that** the free end (13) of the protective cover (10) has an elastic band such that in the folded-together state it encompasses or constricts the lower side (14) of the first base plate (6).

9. Roof tent assembly (1) according to any of the preceding claims, **characterised in that** the protective cover (1) can be pushed up or rolled up laterally for unfolding the roof tent (2) and, in the unfolded state of the roof tent (2), remains on the rear side (9) of the second base plate (7).

## Revendications

1. Agencement de tente de toit (1) pour un véhicule automobile (4), présentant une tente de toit (2) ainsi qu'une enveloppe de protection (10) recouvrant la tente de toit (2) dans l'état rabattu, dans lequel la tente de toit (2) présente deux plaques de base (6, 7) et une première plaque de base (6) se trouve dans l'état monté au-dessus d'un toit (3) du véhicule automobile (4) et une seconde plaque de base (7) qui est agencée dans l'état rabattu à peu près parallèlement à distance au-dessus de la première plaque de base (6) et un corps de tente (8) se trouve entre eux et l'enveloppe de protection (10) recouvre un côté arrière (9) de la seconde plaque de base (7) et chevauche latéralement la tente de toit (2) repliée et enveloppe la première plaque de base (6) au moins dans la zone de bord, **caractérisé en ce que** dans la zone de bord de la seconde plaque de base (7), des baguettes profilées (19), traversant l'enveloppe de protection (10), sont couplées à la seconde plaque de base (7) et/ou qu'une échelle (11) et/ou un support (15), traversant l'enveloppe de protection (10), sont couplés sur le côté arrière (9) de la seconde plaque de base (7) à la seconde plaque de base (7).

2. Agencement de tente de toit (1) selon la revendication 1, **caractérisé en ce que** l'enveloppe de protection (10) est réalisée en un film plastique ou une bâche de camion.

3. Agencement de tente de toit (1) selon la revendication 1 ou 2, **caractérisé en ce que** l'enveloppe de protection (10) est couplée, en particulier collée au niveau d'un côté intérieur dans la zone de bord avec le côté arrière (9) de la seconde plaque de base (7).

4. Agencement de tente de toit (1) selon l'une quelconque des revendications précédentes, **caractérisé en ce que** l'enveloppe de protection (10) est couplée au moins dans la zone de bord du côté arrière (9) de la seconde plaque de base (7) fixement à celle-ci.

5. Agencement de tente de toit (1) selon l'une quelconque des revendications précédentes, **caractérisé en ce que** la zone de bord est une zone de bord extérieure au niveau de la seconde plaque de base (7), en particulier un côté avant (18) périphérique.

6. Agencement de tente de toit (1) selon l'une quelconque des revendications précédentes, **caractérisé en ce que** la zone de bord est réalisée sur le côté arrière (9) de la seconde plaque de base (7), en particulier à distance en déport d'une arête extérieure vers l'intérieur.

7. Agencement de tente de toit (1) selon l'une quelconque des revendications précédentes, **caractérisé en ce que** l'enveloppe de protection (10) est pourvue au niveau de son extrémité libre (13) de moyens de couplage qui sont couplés dans l'état rabattu au niveau du côté inférieur (14) de la première plaque de base (6).

8. Agencement de tente de toit (1) selon l'une quelconque des revendications précédentes, **caractérisé en ce que** l'extrémité libre (13) de l'enveloppe de protection (10) présente un cordon en caoutchouc de telle manière que dans l'état replié il enserre ou étrangle le côté inférieur (14) de la première plaque de base (6).

9. Agencement de tente de toit (1) selon l'une quelconque des revendications précédentes, **caractérisé en ce que** l'enveloppe de protection (1) peut être soulevée ou retroussée latéralement pour le rabattement de la tente de toit (2) et reste dans l'état rabattu de la tente de toit (2) au niveau du côté arrière (9) de la seconde plaque de base (7).
